(19) Europäisches Patentamt
European Patent Office
Office européen des brevets

(11) **EP 2 554 576 B1**

(12) **EUROPEAN PATENT SPECIFICATION**

(45) Date of publication and mention
of the grant of the patent:
**21.03.2018 Bulletin 2018/12**

(21) Application number: **11763050.9**

(22) Date of filing: **31.03.2011**

(51) Int Cl.:
*C08J 5/18* (2006.01)  *G09F 3/02* (2006.01)
*C08G 63/183* (2006.01)  *C08K 3/22* (2006.01)
*C08L 67/03* (2006.01)  *B29C 55/08* (2006.01)
*B29C 61/00* (2006.01)  *C08K 3/00* (2018.01)

(86) International application number:
**PCT/KR2011/002231**

(87) International publication number:
**WO 2011/122878 (06.10.2011 Gazette 2011/40)**

(54) **HEAT-SHRINKABLE POLYESTER-BASED FILM AND HEAT-SHRINKABLE POLYESTER-BASED LABEL**

WÄRMESCHRUMPFENDE FOLIE AUF POLYESTERBASIS SOWIE WÄRMESCHRUMPFENDES ETIKETT AUF POLYESTERBASIS

FILM THERMO-RÉTRÉCISSABLE À BASE DE POLYESTER ET ÉTIQUETTE THERMO-RÉTRÉCISSABLE À BASE DE POLYESTER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2010 KR 20100060023**
**31.03.2010 KR 20100029601**

(43) Date of publication of application:
**06.02.2013 Bulletin 2013/06**

(73) Proprietor: **Kolon Industries, Inc.**
**Gwacheon-si, Gyeonggi-do 13837 (KR)**

(72) Inventors:
• **KIM, Yun Jo**
**Gumi-si**
**Gyeongsangbuk-do 730-764 (KR)**
• **KIM, Dong Jin**
**Gumi-si**
**Gyeongsangbuk-do 730-110 (KR)**
• **KIM, Si Min**
**Daegu 704-140 (KR)**

(74) Representative: **Ter Meer Steinmeister & Partner Patentanwälte mbB**
**Nymphenburger Straße 4**
**80335 München (DE)**

(56) References cited:
EP-A1- 2 058 357        WO-A1-2009/041408
JP-A- H0 615 732        JP-A- H09 239 833
JP-A- 2004 175 067      US-A1- 2006 063 008
US-B1- 6 231 958

**Description**

**Technical Field**

The present invention relates to a polyester-based film having heat shrinkability and to a heat-shrinkable polyester-based label including the film, in particular to a film label to be used as a replacement for a paper label which is attached to glass bottles.

**Background Art**

Taking into consideration environmental requirements and profitability, PET bottles or glass bottles have been collected and recycled. Upon recycling, labels having printed product names, components and other figures excluding the bodies of PET bottles or glass bottles have to be separated and removed from the bottles. In particular, the paper labels that have mainly been used to date are removed using industrial water. Specifically, the collected PET bottles or glass bottles are immersed in industrial water at about 80°C containing caustic soda to remove the labels therefrom. Thereby, recycling of the bottles generates environmental wastewater, which is subject to environmental regulations.

Therefore, the demand for film labels, not paper labels, is increasing.

An example of a film usable as a label includes a polyvinyl chloride-based film, which undesirably causes environmental problems such as the generation of dioxin upon incineration, etc. Accordingly, a heat-shrinkable polyester-based film is receiving attention as a replacement for the paper labels.

A heat-shrinkable polyester-based film may be utilized as a label by printing the film in the form of a sticker or as in a conventional paper label and attaching the film using an aqueous adhesive.

Compared to typical PET bottles or drink bottles, PET bottles or glass bottles used for liquor purposes mainly get their color from a pigment, a UV block, and other additives that are mixed in to minimize the denaturation of the contents of the bottle.

In order to make the advertisement effects that are shown using a film label on such bottles more obvious, the back surface of the printed film label may be subjected to back coating using white ink or the like. In this case, however, coating effects are small and the color of the bottle is projected as is, undesirably decreasing advertisement effects. As such, two or more back coatings are required, which undesirably decreases processability and productivity.

Also when a label is adhered to a bottle using an adhesive, an adhesive is applied on the back surface of a printed label using gravure printing or the like, and thus a mark formed by applying the adhesive is present in the form of a band. Although the paper label may hide such an adhesive mark, the heat-shrinkable film has low hiding capacity and thus such a mark is projected as is, undesirably decreasing advertisement effects.

Also when a paper label is adhered to a bottle using an adhesive, an adhesive is applied on the surface of the paper label opposite the printed surface thereof using gravure printing or the like and the label is attached to the bottle, so that the label having the printing layer may be bonded. However, in the case of a polyester-based shrinkable film label having a printing layer, the rolling phenomenon that takes place on the label itself is large, making it difficult to easily perform a conventional paper label attaching process.

US 6,231,958 B1 is directed to a heat-shrinkable polyester film comprising a repeating unit of trimethyleneterephthalate, a repeating unit of 2,2.dimethyl(-1,3-propylene)terephthalate and a repeating unit of ethyleneterephthalate.

US 2006/0063008 A1 is directed to a heat-shrinkable polyester film having a specific dynamic friction coefficient.

**Disclosure**

**Technical Problem**

Accordingly, the present invention is intended to provide a heat-shrinkable polyester-based film, which retains shrinkability and is colored and thus may exhibit a good print appearance and high hiding capacity when used as a label.

The present invention is also intended to provide a heat-shrinkable polyester-based label, which includes a heat-shrinkable polyester-based film layer which retains shrinkability and is colored and thus may exhibit good print appearance and high hiding capacity when used as a label, and provide a heat-shrinkable polyester-based label for which the rolling phenomenon may be minimized.

Also the present invention is intended to provide a bottle, which includes such an attached heat-shrinkable polyester-based label so that it exhibits good print appearance and high hiding capacity, and in which upon recycling of the bottle, the label may be removed using only hot water to thereby prevent the generation of wastewater and is thus eco-friendly.

Also the present invention is intended to provide a method of manufacturing a label-attached bottle, which enables the delivery of a label sheet and the application of an adhesive to be performed in a single process despite the use of the label made of a film.

**Technical Solution**

A first embodiment of the present invention provides a heat-shrinkable polyester-based film, comprising a polyester-based resin matrix including a repeating unit of butyleneterephthalate and particles dispersed in the resin matrix, wherein the film has an opacity (%) of 20 ~ 70%, an opacity deviation (%) of within ±5% of an average opacity over an entire width of a film roll, a shrinkage of 40 ~ 80% in a maximum shrinking direction upon treatment with warm water at 90°C for 10 sec, and a shrinkage deviation of within ± 5% of an average shrinkage in the maximum shrinking direction, wherein the heat-shrinkable polyester-based film is obtainable by a method according to claim 7.

In this embodiment, the particles may be titanium oxide.

In this embodiment, the polyester-based resin matrix may include at least one copolyester selected from among copolyesters obtained by polymerizing dicarboxylic acid components including one or more dicarboxylic acids such as terephthalic acid, oxalic acid, malonic acid, succinic acid, adipic acid, suberic acid, azelaic acid, sebacic acid, phthalic acid, isophthalic acid, naphthalene dicarboxylic acid, and diphenyl ether dicarboxylic acid, and diol components including one or more diols such as ethyleneglycol, neopentylglycol, propyleneglycol, trimethyleneglycol, tetramethyleneglycol, hexamethyleneglycol, diethyleneglycol, polyalkyleneglycol, and 1,4-cyclohexane dimethanol.

In this embodiment, the copolyester may comprise 80 mol% or more of terephthalic acid based on a total amount of the dicarboxylic acid components.

In this embodiment, the copolyester may have a melting point of 195 ~ 215°C.

In this embodiment, the copolyester may be included in an amount of 85 ~ 98 wt% based on a total amount of the polyester resin.

A second embodiment of the present invention provides a method of manufacturing a heat-shrinkable polyester-based film according to claim 7 by extruding and stretching a polyester-based resin, comprising:

compounding particles having an average particle size of 0.1 ~ 5 μm and a homopolyester-based polybutyleneterephthalate resin having an intrinsic viscosity of at least 0.8 dl/g, thus manufacturing a polyester-based resin master batch containing particles, wherein the particles are included in an amount of 10 ~ 70 wt% based on a total weight of the master batch, wherein the particles are inorganic particles or inert organic particles;

mixing and extruding the polyester-based resin master batch containing particles and a copolyester-based resin including 14 ~ 24 mol% of diols excluding ethyleneglycol based on a total amount of diol components, thus manufacturing an unstretched sheet, wherein the particles are included in an amount of 2 ~ 10 wt% based on a total weight of the sheet;

preheating the extruded polyester-based sheet; and stretching the sheet in a transverse direction at 65 ~ 100°C, wherein the manufacturing the master batch comprises mixing the particles and the homopolyester-based polymer having a melting point difference of within 30°C from the copolyester to create a mixture; placing the mixture in a twin-screw extruder or a kneader so that the mixture is melted and kneaded thus obtaining a homopolyester master batch containing particles, wherein upon obtaining the homopolyester master batch containing particles, a cooling unit is added to inside of a screw of the extruder so that a melting temperature is controlled so as not exceed 260°C.

In this embodiment, stretching in the transverse direction may be performed at a stretching ratio of 3.5 ~ 5.0 times.

In this embodiment, the particles of the polyester-based resin master batch may be titanium oxide.

A third embodiment of the present invention provides a heat-shrinkable polyester-based label, comprising a heat-shrinkable polyester-based film layer according to claims 1 to 6; a printing layer formed on one surface of the heat-shrinkable polyester-based film layer; and an anti-curling layer formed on the other surface of the heat-shrinkable polyester-based film layer.

In this embodiment, the anti-curling layer may have a thickness corresponding to 50 ~ 200% of a thickness of the printing layer.

In this embodiment, the anti-curling layer may have a thickness corresponding to 70 ~ 120% of a thickness of the printing layer.

In this embodiment, the anti-curling layer may be a layer comprising at least one resin selected from among acryl, polyurethane, vinyl, an ethylene-vinylacetate copolymer, a vinylacetate resin, and a ketone resin; and a colorant.

In this embodiment, the anti-curling layer may be a layer formed from a coating solution comprising at least one resin selected from among acryl, polyurethane, vinyl, an ethylene-vinylacetate copolymer, a vinylacetate resin, and a ketone resin, a colorant and a solvent.

A fourth embodiment of the present invention provides a bottle, to which the above label is attached.

A fifth embodiment of the present invention provides a method of manufacturing a label-attached bottle, comprising applying an adhesive onto the anti-curling layer of the above heat-shrinkable polyester-based label; and attaching the heat-shrinkable polyester-based label having the adhesive applied thereon to a bottle.

**Advantageous Effects**

According to the present invention, a heat-shrinkable polyester-based film has superior shrinkability and is colored and thus can exhibit good print appearance after going through a printing process and can replace a paper label. Also this film may be used as a film for a label because it is easily peeled off using hot water, thus contributing to the recycling of bottles.

In addition, a heat-shrinkable polyester-based label according to the present invention includes a heat-shrinkable polyester-based film layer which retains shrinkability and is colored and thus can exhibit good print appearance and high hiding capacity when used as a label, and the rolling phenomenon of the label can be minimized. Because the delivery of a label sheet and the application of an adhesive can be performed in a single process, a conventional paper label production line can be used unchanged. The resulting bottle has a heat-shrinakble polyester-based label attached thereto thus manifesting good print appearance and high hiding capacity, and also, upon recycling of the bottle, the label of the invention can be removed therefrom using only hot water to thereby prevent the generation of wastewater and is thus eco-friendly.

**Best Mode**

Hereinafter, a detailed description will be given of the present invention.

An embodiment of the present invention provides a heat-shrinkable polyester-based film, which includes a polyester-based resin matrix having a repeating unit of butyleneterephthalate and particles dispersed therein, wherein the film has an opacity (%) of 20 ~ 70%, an opacity deviation (%) of within ± 5% of the average over the entire width of a film roll, and a shrinkage of 40 ~ 80% in a maximum shrinking direction upon treatment with warm water at 90°C for 10 sec, and a shrinkage deviation of within ±5% of an average shrinkage in the maximum shrinking direction, wherein the heat-shrinkable polyester-based film is obtainable by a method of the present invention.

Also the present invention provides a label comprising a heat-shrinkable polyester-based film layer according to the present invention; a printing layer formed on one surface of the heat-shrinkable polyester-based film layer; and an anti-curling layer formed on the other surface of the heat-shrinkable polyester-based film layer. Usually the heat-shrinkable polyester-based film layer, the polyester-based resin matrix includes a repeating unit of butyleneterephthalate. Upon commercial use of a typical shrinkable film, a bonding process is adopted, which is performed by dissolving the shrinkable film in a solvent and then attaching it. Taking into consideration solvent bondability, usally the polyester-based resin matrix include a repeating unit of butyleneterephthalate.

However, if the amount of the repeating unit of butyleneterephthalate in the polyester-based resin matrix is too low, solvent bondability may decrease making it difficult to render it commercially viable. In contrast, if the amount thereof is too high, the shrinkage in a main shrinking direction (e.g. a transverse direction (TD)) may decrease, and mechanical properties (strength and elongation) in a direction (e.g. a mechanical direction (MD)) perpendicular to the main shrinking direction may deteriorate. Typically as a film undergoes many rolling processes upon commercial use, it has to have mechanical properties in MD. If the mechanical properties of the film are poor, the film may break down or split. Hence, the repeating unit of butyleneterephthalate may be included in an amount of 2 ~ 15 wt% based on the total amount of the polyester-based resin matrix. In the present invention polybutyleneterephtalate homopolymer is used in amounts according to claim 7. The heat-shrinkable polyester-based film layer according to the present invention has an opacity (%) of 20 ~ 70%. When this film is used as a label for a PET bottle and a glass bottle, which exhibit color, its opacity (%) should be at least 20%, and preferably 40% or more in order to ensure hiding capacity adapted to offset the inherent color of the bottle. If the opacity exceeds 70%, the particles should be added in an excessively large amount, undesirably deteriorating the shrinkage.

The opacity (%) was measured according to ASTM D-1003. Concretely, seven parts were randomly extracted from two peripheral positions and one central position of a polyester film, cut to a size of 5 cm × 5 cm, and placed in a film opacity meter (Film Opacity Meter Series 6000) to measure their respective opacity values (%). The average of five values excluding the maximum and minimum values was determined and defined as the opacity.

While satisfying the above opacity (%), the film of the present invention has to have an opacity deviation (%) of within ±5% of the average over the entire width of a film roll. The low opacity deviation (%) of the film over the entire width of a film roll denotes that the dispersion of the particles is optimized.

In the present invention, the meaning of "the opacity deviation of the film over the entire width of a film roll is within ±5% of the average" will be understood as follows: film samples having a size of 5 cm × 5 cm are cut from contiguous sections of a film over the entire width of the film, and their respective opacity values are measured in the same manner as in the above method of measuring the opacity (%) based on ASTM D-1003, so that the average, the maximum value and the minimum value of all of the samples are determined and the maximum value and the minimum value fall within ±5% of the average over the entire width of the film roll.

The polyester-based film is intrinsically transparent. In order to make such a polyester-based film opaque, inorganic particles or inert organic particles are used. An example of the addition of particles includes adding particles during a polymerization process to obtain a polymer containing a high concentration of the particles. In this case, however, it is difficult to increase the amount of the particles in the polymer so that they are present in at least the predetermined amount due to problems with dispersing the particles while carrying out the polymerization. Briefly it is difficult to exhibit the above opacity (%), and also upon forming a film, a uniform opacity (%) cannot be obtained over the entire width of a film roll because of the non-uniform dispersion.

Accordingly in the present invention, particles are separately mixed with a polymerized polymer, and also, the particles are provided in the form of a master batch so that the amount of the particles that are included is maximized. Furthermore, the preparation process of the master batch of particles may be controlled so as to exert the utmost control over the particle size, the selection of the kind of particles, the dispersion uniformity of particles and uniformity of the amount of particles in the master batch chips. Controlling the above can minimize the opacity deviation (%) over the entire width of a film roll. In the heat-shrinkable polyester-based film layer according to the present invention, the size of the particles may be 0.1 ~ 5 $\mu$m on average. When the average particle size of the particles falls within the above range, it is easy to control the optical characteristics and the shrinkage.

Examples of the inorganic particles which are added so that the film exhibits a color include barium sulfate, titanium oxide and silica. Preferably useful is titanium oxide in terms of good stretchability and inducing scattering of the light which takes place because of the particles. In the case of barium sulfate, micro-voids may be formed in the film during a stretching process to cause diffused reflection of light so that the film is imparted with color. However, there may occur cases where the colored film becomes transparent because the micro-voids formed in the film may disappear due to the close contact of polymer chains while shrinking the film, and thus the variety of applications in which barium sulfate can be used are limited. Also in the case of silica, the size of the particles is limited, and upon forming a film containing a large amount of particles using particles having a large particle size, the large amount of the big particles may protrude from the surface of the film, undesirably deteriorating the print appearance.

Consequently, titanium oxide particles are particles which have an optimal ability to exhibit color while maintaining shrinkability.

Also, the amount of the particles should be controlled so as to satisfy the shrinkage of the film while showing a color depending on the type of particles. The amount of titanium oxide is set to 2 ~ 10 wt% based on the total weight of the film in order to satisfy the shrinkage while ensuring the above opacity (%).

The heat-shrinkable polyester-based film layer according to the present invention has a shrinkage of 40 ~ 80% in a maximum shrinking direction upon treatment with warm water at 90°C for 10 sec.

Typically in order to shrink a vessel or the like coated with a heat-shrinkable film label, etc., the vessel is passed through a hot air tunnel at about 120 ~ 200°C for about 2 ~ 20 sec using hot air at a flow rate of about 2 ~ 20 m/sec, or is passed through a steam tunnel at about 75 ~ 95°C and a pressure of about 0.5 ~ 20 MPa for about 2 ~ 20 sec.

Hence, when the shrinkage, in particular, the hot water shrinkage, of the film according to an embodiment of the invention falls within the above range, very good shrink appearance may be obtained under typical shrinking conditions.

Specifically, if the shrinkage of the film in the main shrinking direction upon treatment with warm water at 90°C for 10 sec is less than 40%, the period of time required to perform a shrinking process may become longer, undesirably lowering productivity, increasing energy costs and decreasing applications adapted for the structure of a vessel, thus making it difficult to apply the film to vessels having a variety of shapes. In contrast, if the shrinkage of the film in the main shrinking direction is more than 80%, it is difficult to allow the air present between the vessel and the label to escape because of the excessively high shrink speed, undesirably forming an air layer between the label and the vessel thus deteriorating the outer appearance of a product.

When the hot water shrinkage range of the heat-shrinkable film is the same as that given above, in order to recycle a bottle or the like that has the heat-shrinkable film label attached thereto by an adhesive, it becomes easy to peel off the label using hot water, and also the film which was peeled off in a state of being rolled in the bottle may be easily taken out of the bottle.

The film which satisfies the above conditions shows a shrinkage deviation of within ±5% of the average in a maximum shrinking direction over the entire width of a film roll. The uniform shrinkage over the entire width of a film roll may result from uniformly dispersing particles which are added to exhibit a color.

In the present invention, the meaning of "a shrinkage deviation of a film in a maximum shrinking direction over the entire width of a film roll is within ±5% of the average" will be understood as follows: ten film samples having a size of 15 mm (MD) × 400 mm (TD) are cut from contiguous sections of a film, and a straight line is drawn in the MD of the film from positions spaced apart by 50 mm from both ends of respective samples in TD to manufacture measurement samples having an effective length of 300 mm required to measure a shrinkage, after which the shrinkage is measured in the maximum shrinking direction under no load in warm water at 90∓05°C thus determining the average, the maximum value and the minimum value of all of the measurement samples, and the maximum and minimum values of the shrinkage in the maximum shrinking direction fall within ±5% of the average.

If the length of a film sample in TD is less than 400 mm, the shrinkage is measured in the same manner as above, so long as the size is sufficiently large that the size of the measurement samples or the effective length required to measure the shrinkage is able to vary.

The heat-shrinkable polyester-based film layer according to the present invention which satisfies such properties includes a homopolyester-based polybutyleneterephthalate resin having an intrinsic viscosity of at least 0.8 dl/g and a copolyester-based resin including 14 - 24 mol% of diols excluding ethyleneglycol based on a total amount of diol components, so that its melting point differs from that of the polybutyleneterephthalate within 30°C. The polyester-based resin matrix can include at least one copolyester selected from among copolyesters obtained by polymerizing dicarboxylic acid components including one or more dicarboxylic acids such as terephthalic acid, oxalic acid, malonic acid, succinic acid, adipic acid, suberic acid, azelaic acid, sebacic acid, phthalic acid, isophthalic acid, naphthalene dicarboxylic acid, diphenyl ether dicarboxylic acid, etc., and diol components including one or more diols such as ethyleneglycol, neopentyl glycol, propylene glycol, trimethyleneglycol, tetramethyleneglycol, hexamethyleneglycol, diethyleneglycol, polyalkylene glycol, 1,4-cyclohexane dimethanol, etc.

In this case, each of the copolyesters may include 80 mol% or more of terephthalic acid based on the total amount of the dicarboxylic acid components. In the present invention, the copolyesters may be prepared using a typical polyester preparation method. Examples of such a preparation method include direct esterification in which a dicarboxylic acid is directly reacted with a diol, transesterification between a dimethyl ester of dicarboxylic acid and a diol, etc.

According to an embodiment of the present invention, the copolyester has a melting point of 195 ~ 215°C and an intrinsic viscosity of or 0.70 dl/g. The melting point (°C) may be adjusted depending on the composition of the monomer used to prepare the polymer, and the intrinsic viscosity may be adjusted depending on the degree of polymerization. In the present invention, the copolyesters having a melting point (°C) and an intrinsic viscosity adjusted according to the method disclosed in claim 7 are used. Meanwhile, a heat-shrinkable film layer is required to be provided in the form of a film roll by rapidly running or winding a long film in a film forming process or a post-process in order to increase productivity. Thus the heat-shrinkable film according to an embodiment of the present invention may include an inline coating layer having an antistatic agent on the surface thereof.

As used herein, the term "inline coating layer" will be understood as a layer formed by performing a coating process during extruding a polyester resin to form a film by those having ordinary knowledge in the art.

The case where the inline coating layer having an antistatic agent is formed on the surface of the film in this way is favorable because static electricity caused by friction may be decreased thus preventing portions of the film from clinging to each other during the course of winding the film, thereby facilitating the removal of air introduced during the winding of the film. Also, in a printing process, poor printing due to static electricity caused by friction between the printing roll and the film may be prevented, and portions of the film may be prevented from clinging due to static electricity upon post-processing, thus controlling poor feeding.

The kind of antistatic agent is not particularly limited but examples thereof include quaternary ammonium compounds, alkyl sulfonate compounds represented by $RSO_3Na$, alkyl sulfate compounds represented by $ROSO_3Na$, alkyl phosphate compounds, etc. The antistatic agent is used in an amount of 0.1 ~ 1.5 wt% based on the effective components of the coating solution for forming the inline coating layer in order to minimize the generation of impurities due to friction in printing, tubing and heat shrinking processes to thereby attain superior processability and antistatic performance.

Also, the inline coating layer may include a binder resin taking into consideration the binding force and the adhesive force. The binder resin is not particularly limited and may be selected in consideration of solubility in a solvent used in a tubing process.

Examples of the binder resin include polyesters, acryl-polyester copolymers, copolyesters, etc.

The heat-shrinkable polyester film layer of the invention having the above characteristics is prepared by going through the following procedure.

First, a master batch of particles is prepared.

In the course of forming the prepared master batch into a film, uniform dispersibiltiy of particles in the master batch, preparation processability of the master batch, drying processability, and uniform miscibility of the master batch with a polymer may be considered. These qualities are particularly subject to variation depending on the characteristics of the polymer used in the master batch.

Typically, a polymer used in the master batch of particles may be the same as the polymer which constitutes the main matrix of a film. In the case of a heat-shrinkable film, however, a copolymer is used so that crystallization seldom occurs upon stretching and heat treatment in the film forming process. Such a polymer has very low heat resistance. In the case where the master batch is manufactured from such a copolymer, the copolymer may be melted at a feeding part of an extruder for manufacturing a master batch, thus decreasing miscibility of particles and copolymer, undesirably making it difficult to manufacture a uniform master batch containing particles. Furthermore, in order to form a film using the master batch, a drying process which removes water has to be carried out, and the typical drying temperature is about 140 ~ 160°C. When the master batch is dried at this temperature, lumping may take place frequently because of the surface fusion of master batch chips, making it difficult to perform the drying process. Thus, the drying process should be carried out at low temperature for a long period of time, undesirably causing a variety of problems including discoloration of the polymer, lowered processability, etc. In the present invention a polybutyleneterephthalate homopolymer is used for the preparation of the master batch. Upon manufacturing a master batch using such a homopolyester, the case where the melting characteristics of the polymer used in the master batch are different from those of the copolymer of the main matrix of the film may decrease the ability to knead the master batch and the copolymer in the course of melting and kneading the master match and the copolymer to form a film, ultimately lowering uniform dispersibility of the particles in the resulting film. According to the present invention the melting point difference between the polyester copolymer of the main matrix of the film and the polybutyleneterephthalate homopolymer is within 30 °C.

If the difference in melting point between the copolymer and the master batch is not less than 30°C, a viscosity difference of the polymer due to the melting temperature becomes excessively large undesirably causing kneading problems and severely deteriorating the properties of the resulting film.

In the present invention, the master batch of particles is preferably manufactured using a polybutyleneterephthalate resin and titanium oxide particles as mentioned above. The reason why the polybutyleneterephthalate resin is used to manufacture the master batch of particles is that the surface fusion of master batch chips does not occur while drying the master batch and thus problems are not generated during the drying process and also because this resin has high melt-kneadability with the copolyester used to form the film, thus exhibiting high uniform dispersibility of particles in the film.

However, upon manufacturing the master batch from polybutyleneterephthalate, which is the polymer used to form a film, because the glass transition temperature of polybutyleneterephthalate is low, feeding problems may occur due to fusion of chips at the feeding part of the extruder.

Therefore, the master batch of particles is manufactured using the following method according to an embodiment of the present invention.

In the method of manufacturing the heat-shrinkable polyester-based film according to the present invention, a step of manufacturing the master batch includes mixing polybutyleneterephthalate with particles thus obtaining a mixture; and placing the mixture into a twin-screw extruder or a kneader to perform melting and kneading thus obtaining a polybutyleneterephthalate master batch containing particles. Upon obtaining the polybutyleneterephthalate master batch containing particles, a cooling unit is added to the inside of the screw of the extruder to control the melting temperature so as not to exceed 260 °C. If the melting temperature is not controlled using the cooling unit upon obtaining the polybutyleneterephthalate master batch containing particles, the chips may be fused at the feeding part of the extruder, thus causing poor feeding, resulting in lowered kneadability with particles.

As such the cooling process may be conducted using water or air over all or part of the length of the screw.

The particles have an average particle size of 0.1 ~ 5 μm as mentioned above, and the polybutyleneterephthalate resin has an intrinsic viscosity of at least 0.8 dl/g in consideration of decreasing the viscosity due to the heat generated during the manufacturing of the master batch.

The amount of the particles of the master batch is 10 ~ 70 wt%, and the maximum amount of the particles of the master batch may be determined in consideration of the dispersion uniformity of particles in the master batch, and processability thereof.

When the polyester-based resin master batch containing particles and the copolymer are mixed and extruded to manufacture a polyester-based sheet, the amount of the master batch is adjusted such that the particles are included in an amount of 2 ~ 10 wt% based on the total weight of the film.

Extrusion may be carried out at 200 ~ 350°C. To this end, any known process such as T-die extrusion or tubular extrusion may be used.

The extruded product is uniformly attached to a cooling roll using an electrostatic charge contact process or the like and is thus rapidly cooled, thereby obtaining an unstretched film.

The unstretched film is passed through rollers which run naturally in MD, followed by performing pretreatment, TD stretching and then heat treatment.

As such, because the opacity of the film may vary depending on the stretching conditions even when the amount of particles that are used is the same, the stretching conditions have to be controlled. The heat treatment conditions must also be controlled for the same reason. That is, the opacity (%) may vary depending on the stretching conditions. As the stretching temperature drops, the opacity (%) increases given a constant amount of particles. In this case, however, workability may decrease due to splitting, and thus the stretching temperature be set to 65 ~ 100°C, and the stretching ratio may be set to 3.5 ~ 5.0 times.

If the stretching ratio of the shrinkable film is low, the shrinkage of the film may decrease. In contrast, if the stretching ratio is too high, splitting may occur or it is difficult to improve other properties, and so increasing the stretching ratio above a certain amount has no positive benefit. Hence, the stretching ratio may be set in the range of about 3.5 ~

5.0 times the original length of the film.

The stretching may be conducted using a typical device, and any known process such as roll stretching, tenter stretching, tubular stretching, etc. may be employed.

After the stretching process, heat treatment is conducted in a temperature range from room temperature to 100°C.

In order to form the inline coating layer as above, before pretreating the extruded polyester sheet, a coating of a coating solution including an antistatic agent may be applied, and the subsequent processes may be performed.

The heat-shrinkable polyester-based label according to an embodiment of the present invention is obtained by forming a printing layer on one surface of the heat-shrinkable polyester-based film layer using a typical process.

The printing layer functions to publicize the corresponding product by printing items about the content of the vessel, advertisements and warnings using letters or figures. Such a printing layer may be formed using any known process, for example gravure printing, flexo printing or screen printing. The thickness of the printing layer may be 0.5 ~ 10 μm in terms of performing the functions as a printing layer and preventing the printing layer from being broken.

Also the heat-shrinkable polyester-based label according to the present invention includes an anti-curling layer formed on the other surface of the heat-shrinkable polyester-based film layer.

An example of a known process for attaching a paper label in particular a sheet of label to a glass bottle or the like includes continuously applying an adhesive using gravure printing or the like and attaching the label to the bottle while a label having a predetermined size and having a printing layer is transported (which is called an "online adhesion process").

Even if the paper label having the printing layer may retain an appropriate amount of flatness, the heat-shrinkable polyester-based film layer having the printing layer thereon may be detracted from by the severity of the rolling phenomenon. Thus, bottle manufacturers or liquor manufacturers in which conventional paper labels have been used have difficulties in applying film labels.

Therefore, the label according to an embodiment of the present invention includes an anti-curling layer which is formed on the surface of the heat-shrinkable polyester-based film layer opposite the surface on which the printing layer is formed.

The composition of the anti-curling layer is not particularly limited so long as it offsets the curling of the printed film layer, but may be composed of one or more resins selected from among acryls, polyurethanes, vinyls, ethylene-vinyl acetate copolymers, vinylacetate resins, and ketone resins, a solvent and an additive such as a white pigment, a precipitation inhibitor, a thickener, a color separation inhibitor, a pigment dispersant, etc. This composition is preferable because the curling of the printed film layer may be easily controlled after having been applied thereon. The solvent which forms the coating solution is not particularly limited but may include one or more selected from among an aromatic hydrocarbon-based solvent, a ketone-based solvent, an acetate-based solvent, a chlorine-based solvent and an alcohol-based solvent, in consideration of the solvent used to form the printing layer.

Such an anti-curling layer has a thickness corresponding to 50 ~ 200% of the thickness of the printing layer so that the effects desired of the anti-curling layer may be guaranteed. Preferably in order to maintain flatness of the label, the thickness of the anti-curling layer is the equivalent of 70 ~ 120% of the thickness of the printing layer.

The heat-shrinkable polyester-based label may be attached to a glass bottle or the like using a conventional process used to attach a paper label. In consideration of the material of the film and the environmental conditions, an aqueous adhesive may be used, and such an aqueous adhesive is applied on the heat-shrinkable polyester-based film transported in the form of a sheet of label and then the label is attached to the bottle, thus obtaining the label-attached bottle.

**Mode for Invention**

Infra are given examples by which the present invention will be more fully understand. The evaluation methods used in the present invention are as follows.

(1) Intrinsic Viscosity (I.V.) of Film

IV was measured using a viscosity meter at a concentration of 0.3 g per 25 ml of ortho-chlorophenol at 35°C.

(2) Measurement and Definition of Melting Point (°C)

A polymer was placed in liquid nitrogen for 30 sec and then taken out of the liquid nitrogen, after which the polymer was powdered using a milling machine (Hico-10-6-388), and the polymer powder was charged into a capillary tube (2 × 100 mm) having an indication line. The capillary tube containing the polymer powder at a height not less than the indication line (typically corresponding to 2/3 or more of the total tube length) was then placed in a melting point meter (Thomas Hoover Capillary Melting Point Apparatus), and the temperature at which the polymer in the capillary tube was dissolved while being heated at a rate of 30 °C/min was measured using a thermometer, and was thus defined as the melting point (Tm).

(3) Heat Shrinkage

A film was cut into a rectangular shape having a size of 15 mm (MD) × 400 mm (TD), and a straight line was drawn in MD of the film from positions spaced apart by 50 mm from both ends of the film in TD thus manufacturing a sample having an effective measurement length of 300 mm. While being held by a pincette or the like at a position within 50 mm from one end of the sample regardless of right and left, the sample was completely immersed in warm water at 90°C□0.5°C under no load so that it was thermally shrunk for 10 sec, after which the sample was allowed to stand at room temperature for 1 min. The length by which the initial 300 mm had decreased as represented by the straight line in TD was measured, and the heat shrinkage of the film in TD was determined by the following Equation 1.

<Equation 1>

$$Heat\ Shrinkage\ (\%) = \frac{300\ mm - Length\ after\ Shrinking}{300\ mm} \times 100$$

(4) Shrinkage Deviation

Ten film samples having a size of 15 mm (MD) × 400 mm (TD) were cut from contiguous sections of a film, and a straight line was drawn in MD from positions spaced apart by 50 mm from both ends of respective film samples in TD to manufacture measurement samples having an effective measurement length of 300 mm. While being held by a pincette or the like at a position within 50 mm from one end of each of the samples regardless of right and left, the samples were completely immersed in warm water at 90□0.5°C under no load so that they were thermally shrunk for 10 sec, after which the samples were allowed to stand at room temperature for 1 min. The length by which the initial 300 mm had decreased as represented by the straight line in TD was measured, thus determining the shrinkage of the film in a maximum shrinking direction. The average, the maximum value and the minimum value of all of the samples were determined, and the absolute value was taken of the difference between the average and the maximum value or the minimum value. Among these values, the larger value was defined as the shrinkage deviation as determined by the following Equation 2.

<Equation 2>

Shrinkage Deviation = |Average Shrinkage Value – Maximum Shrinkage Value (or Minimum Shrinkage Value)|

(5) Opacity (%)

The opacity of the film was measured according to ASTM D-1003. Specifically, seven parts were randomly extracted from two peripheral positions and one central position of a polyester film, cut to a size of 5 cm × 5 cm, placed in a film opacity meter (Film Opacity Meter Series 6000) to measure their respective opacity values (%), and the average of five values excluding the maximum value and the minimum value was determined to calculate the opacity (%).

(6) Opacity Deviation (%)

Samples having a size of 5 cm × 5 cm were cut from contiguous sections of a film over the entire width of the film, and their opacity (%) values were measured in the same manner as in the above measurement of opacity (%) using ASTM D-1003, thus determining the average, the maximum value and the minimum value of all of the samples, after which the absolute value was taken of the difference between the average and the maximum value or the minimum value. Among these values, the larger value was defined as the opacity deviation (%) as determined by the following Equation 3.

<Equation 3>

Opacity Deviation = |Average Opacity Value - Maximum Opacity Value (or Minimum Opacity Value)|

(7) Evaluation of Print Appearance

A film roll having a width of 560 mm and a length of 2000 m was printed to measure the number of protrusions generated upon printing in order to evaluate printing uniformity.

Using a typical gravure printing machine, 6-color printing using red, blue, yellow, green, black and white was carried out. Poor printing due to protrusions was judged based on circular and oval printing dots formed by the non-uniform application of ink, and thus a printing defect was determined based on the number of protrusions generated over 2000 m according to the following Equation 4.

<Equation 4>

Printing Defect (%) = [Number of generated Protrusions (ea)/ 2000 (m)] × 100

(8) Evaluation of Peeling of Film

An aqueous adhesive prepared by mixing 45 parts by weight of styrene-butadiene rubber latex, 40 parts by weight of an acrylic emulsion, 10 parts by weight of an ethylene-vinyl emulsion, 0.8 parts by weight of sodium hydroxide, 0.1 parts by weight of a disinfecting agent, and 4.1 parts by weight of water was applied to a thickness of 5 °Cm on a film. The film having the adhesive applied thereon was attached to a glass bottle, reciprocally rubbed ten times using a rubber roller under a pressure of 3 kg/cm$^2$ over the entire area of the film so that the film was firmly attached to the glass bottle, and then allowed to sit at room temperature for 2 days to solidify the adhesive, thereby securely fixing the film to the glass bottle.

1000 glass bottles having films attached thereto were allowed to stand in warm water at 80°C for 2 min, and the bottles from which the film did not completely peel off were counted, and the degree of peeling was evaluated by a peeling defect'according to the following Equation 5.

<Equation 5>

$$Peeling\ Defect\ (\%) = \frac{Number\ of\ Bottles\ from\ which\ film\ did\ not\ completely\ peel\ off\ (ea)}{1000\ (ea)} \times 100$$

(9) Evaluation of Curling of Label

A film was cut into a square shape having a size of 20 cm (MD) × 20 cm (TD) and then placed on a flat table at room temperature so that the printing layer was positioned on the outermost surface of the film, after which the distance between four corners of the film, which were curled upwards, and the table was measured. Among the measured values, the average of five values excluding the maximum and minimum values was determined and used to calculate the curling (mm) of four corners of the film.

(10) Evaluation of Label Adhesion during Bottle Manufacturing

A heat-shrinkable polyester-based label was cut to a size of 8 cm (width) × 8 cm (length), an adhesive was applied thereon using gravure printing, and then 1000 glass bottles (Soju bottles) were subjected to labeling using a labeler. 1000 labeled glass bottles were then stored at room temperature for 24 hr, after which the number of bottles whose labels were wrinkled or the corners thereof were peeled off was counted, and thus the adhesion was evaluated based on an adhesion defect according to the following Equation 6.

<Equation 6>

$$Adhesion\ Defect = \frac{Number\ of\ Bottles\ having\ Wrinkled\ Labels\ or\ Peeled\ Label\ Corners\ (ea)}{1000\ (ea)} \times 100$$

(11) Evaluation of Peeling of Label

An aqueous adhesive prepared by mixing 45 parts by weight of styrene-butadiene rubber latex, 40 parts by weight of an acrylic emulsion, 10 parts by weight of an ethylene-vinyl emulsion, 0.8 parts by weight of sodium hydroxide, 0.1 parts by weight of a disinfecting agent, and 4.1 parts by weight of water was applied to a thickness of 5 °Cm onto the surface of the printed label opposite the printed surface. The label having the adhesive applied thereon was attached to a glass bottle, reciprocally rubbed ten times using a rubber roller under a pressure of 3 kg/cm$^2$ over the entire area of the label so that the label was firmly attached to the bottle, and then allowed to stand at room temperature for 2 days to solidify the adhesive, thereby securely fixing the label to the glass bottle.

1000 glass bottles having labels attached thereto were allowed to stand in warm water at 80°C for 2 min, and the bottles from which the label did not completely peel off were counted, and the degree of peeling was evaluated by a peeling defect according to the following Equation 7.

<Equation 7>

$$Peeling\ Defect\ (\%) = \frac{Number\ of\ Bottles\ from\ which\ label\ did\ not\ completely\ peel\ off\ (ea)}{1000\ (ea)} \times 100$$

<Example 1>

[0107]

　(1) 100 mol% of terephthalic acid as a dibasic acid component, 100 mol% of ethyleneglycol and 24 mol% of neopentylglycol as glycol components, and 0.05 mol antimony trioxide (for the acid component) as a catalyst were polycondensed through direct esterification, thus preparing copolyester (Co-PET) having an intrinsic viscosity of 0.67 dl/g and a melting point of 204°C.

　(2) 100 mol% of terephthalic acid, 100 mol% of 1,4-butanediol, and 0.015 parts by weight of tetrabutyltitanate as a catalyst were polymerized, thus obtaining a polybutyleneterephthalate (PBT) resin (intrinsic viscosity: 0.97 dl/g, melting point: 220°C).

　(3) A mixture of the PBT resin and titanium oxide particles (particle size: 0.5 °Cm) was placed in a twin-screw extruder or a kneader and then melted and kneaded, thus obtaining polyester-based master batch chips containing particles.

The screw of the extruder was provided with a cooling unit for water cooling, so that a melting temperature was controlled so as not to exceed 260°C, and the amount of titanium oxide in the master batch was 50 wt%.

　(4) When the (1) copolyester and the (3) master batch were fed into the extruder, to prevent miscibility of the chips from decreasing due to the difference in specific gravity therebetween, a quantitative feeder (e.g. a side feeder) was provided so that 20 wt% of the master batch was fed based on the total weight of the polymer.

The above two kinds of polymers were melted, kneaded and extruded using an extruder at 280°C, and then rapidly cooled using a cooling roller, thus obtaining a solidified unstretched film.

The unstretched film was passed through a roller moving in MD, subjected to inline coating (ILC), preheated at 85°C, stretched 4.1 times in TD at 71°C, and then heat treated at room temperature, thus manufacturing a film.

As such, ILC was conducted by applying a coating solution containing 0.4 wt% of an acryl-polyester copolymer binder and 0.1 wt% of an alkyl phosphate-based antistatic agent based on effective components thereof using Mayer Bar #4.

The obtained film was a heat-shrinkable film having a thickness of 50 μm. The properties of the film are shown in Table 3 below.

<Example 2>

A heat-shrinkable film was manufactured in the same manner as in Example 1, with the exception that (4) 96 wt% of the (1) copolyester (Co-PET) and 4 wt% of the (2) PBT resin were mixed and dried thus obtaining chips which were then fed into a hopper at the top of the extruder, and the (3) master batch was fed in an amount of 20 wt% based on the total weight of the polymer using a side feeder. The properties of the film are shown in Table 3 below.

<Examples 3 to 9>

Heat-shrinkable films were manufactured in the same manner as in Example 1, with the exception that the melting point of the copolyester, the size of the particles used in master batch chips, the amount of particles in the film, the stretching temperature in TD, and the heat treatment temperature were changed as shown in Table 1 below. The properties of the films are shown in Table 3 below.

<Reference Example 1>

A heat-shrinkable film was manufactured in the same manner as in Example 1, with the exception that a unit for controlling the melting temperature was not added during the manufacturing of the master batch containing particles in (3).

The properties of the film are shown in Table 3 below.

<Reference Example 2>

A heat-shrinkable film was manufactured in the same manner as in Example 1, with the exceptions that the (1) copolyester was used instead of the PBT resin when the master batch containing particles was manufactured, and the drying of the copolyester containing particles was conducted at 120°C for 30 hr with stirring at 10 rpm using a stirrer. In addition as in Example 1, a cooling unit was added to the inside of the screw of the extruder so that the melting temperature was controlled so as not to exceed 260°C upon manufacturing the master batch in (3), and the amount of titanium oxide in the master batch was 50 wt%. Also upon feeding the master batch in (4), a side feeder was provided so that 20 wt% of the master batch was fed based on the total weight of the polymer.

The properties of the film are shown in Table 3 below.

<Reference Example 3>

A heat-shrinkable film was manufactured in the same manner as in Example 1, with the exception that the following homopolyester was used instead of the (2) PBT resin when the master batch containing particles was manufactured.

100 mol% of terephthalic acid as a dibasic acid component, 124 mol% of ethyleneglycol as a glycol component, and 0.05 mol antimony trioxide (for the acid component) as a catalyst were polycondensed through direct esterification, thus preparing homopolyester (Homo-PET) having an intrinsic viscosity of 0.65 dl/g and a melting point of 256°C suitable for use in manufacturing a master batch.

The size and amount of particles were the same as in Example 1, and a unit for controlling the melting temperature was not added during the manufacturing of the master batch.

Upon feeding the master batch in (4) of Example 1, a side feeder was provided so that 20 wt% of the master batch was fed based on the total weight of the polymer.

The properties of the film are shown in Table 3 below.

<Reference Examples 4 to 6>

Heat-shrinkable films were manufactured in the same manner as in Examples 5 to 9, with the exception that the amount of the particles in the film and the TD stretching conditions were changed as shown in Table 2 below.

The properties of the films are shown in Table 3 below.

<Example 10>

(1) On an ILC layer of the heat-shrinkable polyester-based film of Example 1, 5-color printing was conducted using a gravure roll from 100 wt% of each of five kinds of coating solutions comprising 10 wt% of an acrylic resin (BPS-5698, SamYoung Toyo), 89 wt% of methylethylketone (MEK, Daeshin Chemicals) as a ketone-based solvent, and each of a yellow colorant (Yellow 10G, Hyundai Chemical), a red pigment (Red-FRN, Hyundai Chemical), a green pigment (Green 735, Hyundai Chemical), a black pigment (Black #30, Hyundai Chemical) and a white pigment (R-100, KPI), a precipitation inhibitor, a thickener, a color separation inhibitor, and a pigment dispersant, thus forming a printing layer having a thickness of 2 μm.

(2) 5-color printing was performed using a gravure roll from a coating solution including a white pigment (R-100, KPI) among the coating solutions of (1), thus forming an anti-curling layer having a thickness of 2 μm, resulting in a label. The properties of the manufactured label are shown in Table 4 below.

<Example 11>

A printing layer and an anti-curling layer were formed as in (1) and (2) of Example 9 on the film of Example 2 thus manufacturing a label. The properties of the manufactured label are shown in Table 4 below.

<Examples 12 to 17>

A printing layer and an anti-curling layer were formed as in (1) and (2) of Example 10 on each of the films of Examples 3 to 8 thus manufacturing labels. The properties of the manufactured labels are shown in Table 4 below.

<Example 18>

A label was manufactured in the same manner as in Example 9, with the exception that the thickness of the anti-curling layer was changed to 4 μm.

<Example 19>

A label was manufactured in the same manner as in Example 18, with the exception that in the coating solution for forming the anti-curling layer, an ethylene-vinyl acetate copolymer resin (VS410, Honam Petrochemical) and toluene as an aromatic hydrocarbon-based solvent were used. The properties of the manufactured label are shown in Table 4 below.

<Reference Examples 7 to 12>

Labels were manufactured in the same manner as in Examples 12 to 17, with the exception that the anti-curling layer was not formed. The properties of the manufactured labels are shown in Table 4 below.

[Table 1]

| | | Ex.1 | Ex.2 | Ex.3 | Ex.4 | Ex.5 | Ex.6 | Ex.7 | Ex.8 | Ex.9 |
|---|---|---|---|---|---|---|---|---|---|---|
| CO-PET | Ethyleneglycol (mol%) | 100 | 100 | 96 | 106 | 100 | 100 | 106 | 102 | 100 |
| | Neopentylglycol (mol%) | 24 | 24 | 28 | 18 | 24 | 24 | 18 | 22 | 24 |
| | IV (dl/g) | 0.67 | 0.67 | 0.62 | 0.69 | 0.67 | 0.67 | 0.69 | 0.68 | 0.67 |
| | Melting Point(°C) | 204 | 204 | 200 | 208 | 204 | 204 | 208 | 205 | 204 |
| Master Batch having Particles | Average Particle Size (°Cm) | 0.5 | 0.5 | 2.5 | 0.2 | 0.5 | 4.5 | 0.5 | 0.5 | 6.0 |
| | Amount of Particles (wt%) | 50 | 50 | 20 | 60 | 50 | 50 | 10 | 50 | 50 |
| | Applied Polymer Type | Homo | Homo | Homo | Homo | Homo | Homo | Homo | Homo | Homo |
| | Applied Polymer | PBT | PBT | PBT | PBT | PBT | PBT | PBT | PBT | PBT |
| | Polymer, IV (dl/g) | 0.97 | 0.97 | 0.97 | 0.97 | 0.97 | 0.85 | 1.20 | 0.97 | 0.97 |
| | Polymer, Melting Point(°C) | 220 | 220 | 220 | 220 | 220 | 220 | 225 | 220 | 220 |
| | Amount of Mixed Master Batch (wt%) | 20 | 20 | 20 | 5 | 7 | 4 | 20 | 7 | 7 |
| Use of Cooling Unit in Extruder upon Manufacturing Master Batch | | °C | °C | °C | °C | °C | °C | °C | °C | °C |
| Amount of Particles per Total | | 10 | 10 | 4 | 3 | 3.5 | 2 | 2 | 3.5 | 3.5 |
| Weight of Film (wt%) | | | | | | | | | | |
| MD Stretch | Stretching Ratio (%; Additional Stretch other than natural stretch) | 1.003 | 1.003 | 1.003 | 1.005 | 1.003 | 1.003 | 1.050 | 1.003 | 1.003 |
| TD Stretch | Preheat Temp (°C) | 85 | 85 | 85 | 82 | 88 | 92 | 90 | 93 | 80 |
| | Stretch Temp (°C) | 71 | 71 | 73 | 96 | 72 | 94 | 80 | 69 | 102 |
| | Stretch Ratio (Times) | 4.1 | 4.1 | 4.2 | 4.1 | 3.8 | 4.1 | 4.5 | 4.2 | 4.2 |
| | Heat Treatment Temp (°C) | Room Temp | Room Temp | Room Temp | 83 | 83 | 94 | Room Temp | Room Temp | Room Temp |

EP 2 554 576 B1

[Table 2]

| | | Ref.Ex. 1 | Ref.Ex. 2 | Ref.Ex. 3 | Ref.Ex. 4 | Ref.Ex. 5 | Ref.Ex, 6 |
|---|---|---|---|---|---|---|---|
| CO-PET | Ethyleneglycol (mol%) | 100 | 100 | 100 | 100 | 106 | 102 |
| | Neopentylglycol (mol%) | 24 | 24 | 24 | 24 | 18 | 22 |
| | IV (dl/g) | 0.67 | 0.67 | 0.67 | 0.67 | 0.69 | 0.68 |
| | Melting Point(°C) | 204 | 204 | 204 | 204 | 208 | 205 |
| Master Batch having Particles | Average Particle Size (°Cm) | 0.5 | 0.5 | 0.5 | 0.5 | 0.5 | 0.5 |
| | Amount of Particles (wt%) | 50 | 50 | 50 | 50 | 30 | 50 |
| | Applied Polymer Type | Homo | Co | Homo | Homo | Homo | Homo |
| | Applied Polymer | PBT | Co-PET | PET | PBT | PBT | PBT |
| | Polymer, IV (dl/g) | 0.97 | 0.67 | 0.65 | 0.97 | 1.20 | 0.97 |
| | Polymer, Melting Point(°C) | 220 | 204 | 256 | 220 | 225 | 220 |
| Amount of Mixed Master Batch having Particles (wt%) | | 20 | 20 | 20 | 25 | 5 | 7 |
| Use of Cooling Unit in Extruder upon Preparing Master Batch | | × | °C | × | °C | °C | °C |
| Amount of Particles per Total Weight of Film (wt%) | | 10 | 10 | 10 | 12.5 | 1.5 | 3.5 |
| MD Stretch | Stretching Ratio (%; Additional Stretch other than natural stretch) | 1.003 | 1.003 | 1.003 | 1.003 | 1.050 | 1.003 |
| TD Stretch | Preheat Temp (°C) | 85 | 85 | 85 | 88 | 90 | 80 |
| | Stretch Temp (°C) | 71 | 71 | 71 | 72 | 80 | 102 |
| | Stretch Ratio (Times) | 4.1 | 4.1 | 4.1 | 3.8 | 4.5 | 4.2 |
| | Heat Treatment Temp (°C) | Room Temp | Room Temp | Room Temp | 83 | Room Temp | Room Temp |

Note 1) "Applied Polymer Type": Upon polymerizing a polymer dicarboxylic acid and diol used to manufacture a master batch, the case where a single dicarboxylic acid component and a single diol component are used is represented by "Homo", and the case where one or more different dicarboxylic acid components or diol components are used is represented by "Co".

Note 2) "Applied Polymer": This is a polymer used to manufacture a master batch. (PBT= polybutyleneterephthalate, Co-PET = neopentylglycol-copolymerized polymer, PET = polyethyleneterephthalate)

[Table 3]

| | Heat Shrinkage (%) | Heat Shrinkage Deviation (%) | Opacity (%) | Opacity Deviation (%) | Printing Defect (%) | Peeling Defect (%) |
|---|---|---|---|---|---|---|
| Ex. 1 | 76.2 | 2.3 | 63.5 | 3.0 | 0 | 0 |
| Ex. 2 | 75.6 | 2.5 | 62.2 | 3.3 | 0 | 0 |
| Ex. 3 | 78.5 | 2.6 | 35.2 | 2.3 | 0 | 0 |
| Ex. 4 | 42.3 | 1.7 | 30.7 | 1.5 | 0 | 0.3 |
| Ex. 5 | 67.8 | 2.3 | 33.1 | 1.7 | 0 | 0 |

(continued)

| | Heat Shrinkage (%) | Heat Shrinkage Deviation (%) | Opacity (%) | Opacity Deviation (%) | Printing Defect (%) | Peeling Defect (%) |
|---|---|---|---|---|---|---|
| Ex. 6 | 40.6 | 2.3 | 24.5 | 1.6 | 0 | 0.5 |
| Ex. 7 | 68.9 | 3.3 | 22.8 | 2.0 | 0 | 0 |
| Ex. 8 | 74.2 | 2.1 | 35.2 | 1.8 | 0 | 0 |
| Ex. 9 | 40.2 | 4.1 | 23.1 | 3.5 | 34.5 | 1.0 |
| Ref.Ex. 1 | 71.8 | 6.3 | 58.7 | 8.5 | 20.3 | 0.3 |
| Ref.Ex. 2 | 70.7 | 8.7 | 50.6 | 11.5 | 45.7 | 5.1 |
| Ref.Ex. 3 | 67.2 | 7.9 | 52.3 | 7.6 | 36.1 | 12.4 |
| Ref.Ex. 4 | 60.5 | 7.5 | 63.7 | 12.8 | 54.3 | 1.5 |
| Ref.Ex. 5 | 69.4 | 3.0 | 18.5 | 1.3 | 0 | 0 |
| Ref.Ex. 6 | 38.3 | 5.4 | 30.3 | 6.7 | 0 | 16.8 |
| Note 3) The peeling defects of Table 3 were measured by evaluating the peeling of the film. | | | | | | |

As is apparent from Table 3, in Reference Example 1 in which the melting temperature of the extruder was not controlled during the manufacturing of the master batch, poor feeding was caused at the extruder undesirably decreasing miscibility of the particles and the polymer and thus lowering uniformity of particles in the master batch. Accordingly, the film obtained by mixing and extruding the copolyester and the master batch had low dispersibility of particles and non-uniform stretching thus causing deviations in heat shrinkage deviation and opacity (%), and incurring poor printing because of the aggregation of the particles, consequently deteriorating the outer appearance of the film.

In Reference Example 2 using the copolyester upon manufacturing the master batch, lumping was mainly generated due to surface fusion of the master batch chips during the drying of the master batch, and thereby the productivity of the drying process was lowered to 50% or less compared to the examples, thus making it difficult to produce a film. Because of the lumping of the master batch chips, feeding uniformity of the chips into the extruder was decreased, and a severe amount of hydrolysis took place upon discharging the polymer attributed to partial non-uniform drying of the lumped chips, undesirably lowering the viscosity and decreasing the discharge pressure of a die, resulting in a film that had a non-uniform thickness. Thereby, the deviation in the shrinkage and the deviation in the opacity (%) were greatly increased, and when the label was printed, printing was very poor due to non-uniform thickness. Furthermore upon removing the label, peeling was also non-uniform due to non-uniform shrinkage, consequently deteriorating the peeling processability.

In Reference Example 3 using the homopolyester (PET) having a large melting point difference upon manufacturing the master batch, a difference in melting viscosity was very great due to a difference in melting point between the copolyester and the homopolyester (PET) containing particles, thus decreasing kneadability to thereby lower uniform dispersibility of the particles in the film. Moreover, the thickness was not uniform due to non-uniform stretching stress, undesirably causing large deviations in shrinkage and opacity (%), and upon printing the label, printing was very poor due to non-uniform thickness.

In Reference Example 4 in which the amount of the particles in the film exceeded the appropriate level, stretching became non-uniform due to the excessive addition of particles thus causing large deviations in shrinkage and opacity (%), and protrusions were generated because of the partial aggregation of the particles, undesirably deteriorating the print appearance.

In Reference Example 5 in which the amount of the particles in the film was not more than the appropriate level, it was difficult to obtain the desired opacity (%), and printing was not problematic but a white back-coating had to be applied onto the surface opposite the printed surface, undesirably decreasing processability and increasing manufacturing costs.

In Reference Example 6 in which the stretching temperature was too high, uniform stretching was difficult over the entire width thus obtaining poor thickness, thereby causing large deviations in shrinkage and opacity (%). Furthermore, the shrinkage was too low, and thus upon peeling, there was a large defect in terms of the peeling, remarkably decreasing the processability.

In Example 9 using the master batch chips containing particles having a particle size not less than the appropriate level, protrusions were greatly generated due to the uplift of the particles in the stretching process because of excessively large particle size, thus increasing the printing defect, resulting in slightly decreased productivity.

Therefore, the master batch using the homopolyester-based resin having a melting point difference of within 30°C from the copolyester according to the present invention was used, thus obtaining the film including particles dispersed in the resin matrix. When the heat-shrinkable polyester-based film had an opacity (%) of 20 ~ 70%, an opacity deviation (%) of within ±5% of the average over the entire width of a film roll, and a shrinkage of 40 ~ 80% in a maximum shrinking direction upon treatment with warm water at 90°C for 10 sec, and a shrinkage deviation of within ±5% of the average in a maximum shrinking direction, processability, print appearance, and peeling characteristics were superior.

[Table 4]

| | Shrinkable Polyester-based Film | | Label | | |
|---|---|---|---|---|---|
| | Heat Shrinkage (%) | Opacity (%) | Curling (mm) (measured from 4 corners) | Adhesion Defect (%) | Peeling Defect (%) |
| Ex. 10 | 76.2 | 63.5 | 0.1/0.1/0.2/0.1 | 0.7 | 0.5 |
| Ex. 11 | 75.6 | 62.2 | 0.2/0.2/0.0/0.1 | 1.1 | 0.6 |
| Ex. 12 | 78.5 | 35.2 | 0.5/0.3/0.3/0.4 | 2.8 | 1.9 |
| Ex. 13 | 42.3 | 30.7 | 0.2/0.5/0.2/0.3 | 0.8 | 0.6 |
| Ex. 14 | 67.8 | 33.1 | 0.4/0.4/0.3/0.3 | 0.8 | 0.5 |
| Ex. 15 | 40.6 | 24.5 | 0.6/0.4/0.4/0.5 | 3.7 | 3.2 |
| Ex. 16 | 68.9 | 22.8 | 0.3/0.2/0.3/0.3 | 0.7 | 0.7 |
| Ex. 17 | 74.2 | 35.2 | 0.4/0.4/0.4/0.3 | 0.9 | 0.6 |
| Ex. 18 | 76.2 | 63.5 | -0.1/0.0/-0.2/-0.3 | 1.2 | 0.6 |
| Ex. 19 | 76.2 | 63.5 | -0.2/-0.1/-0.1/-0.3 | 1.7 | 0.5 |
| Ref.Ex. 7 | 78.5 | 35.2 | -1.2/-1.5/-1.3/-1.6 | 14.0 | 3.9 |
| Ref.Ex. 8 | 42.3 | 30.7 | -1.3/-1.7/-1.2/-1.4 | 15.8 | 11.1 |
| Ref.Ex. 9 | 67.8 | 33.1 | -1.9/-2.0/-2.0/-2.0 | 21.5 | 1.0 |
| Ref.Ex. 10 | 40.6 | 24.5 | -2.3/-2.2/-2.3/-1.9 | 25.2 | 14.8 |
| Ref.Ex. 11 | 68.9 | 22.8 | -1.8/-1.8/-1.5/-1.6 | 18.3 | 0.9 |
| Ref.Ex. 12 | 74.2 | 35.2 | -1.3/-1.2/-1.7/-1.5 | 16.7 | 1.7 |

Note 4) The measurements that were made on the shrinkable polyester-based films of Examples 17 and 18 and Reference Examples 7 to 12, which were slightly different from the corresponding examples, are regarded as errors stemming from the production sites.

Note 5) Upon evaluation of curling, the negative (-) value means that curls are formed not in the direction of the surface layer of the label on which the printing layer is positioned but in the direction of the back surface of the printing layer, that is, in the direction of the lower portion (anti-curling layer) of the label.

Note 6) The peeling defects of Table 4 were measured by evaluating the peeling of the label.

As is apparent from Table 4, the films of the examples according to the present invention had superior shrinkability, opacity and so on, and the resulting labels can be used as a replacement for typical paper labels and can be removed in an eco-friendly manner. However, the case where the anti-curling layer is not formed does not satisfy process feability to the extent that it can be used as a replacement for typical paper labels.

| | | | | | |
|---|---|---|---|---|---|
| Ref.Ex. 9 | 67.8 | 33.1 | -1.9/-2.0/-2.0/-2.0 | 21.5 | 1.0 |
| Ref.Ex. 10 | 40.6 | 24.5 | -2.3/-2.2/-2.3/-1.9 | 25.2 | 14.8 |
| Ref.Ex. 11 | 68.9 | 22.8 | -1.8/-1.8/-1.5/-1.6 | 18.3 | 0.9 |
| Ref.Ex. 12 | 74.2 | 35.2 | -1.3/-1.2/-1.7/-1.5 | 16.7 | 1.7 |

Note 4) The measurements that were made on the shrinkable polyester-based films of Examples 17 and 18 and Reference Examples 7 to 12, which were slightly different from the corresponding examples, are regarded as errors stemming from the production sites.

Note 5) Upon evaluation of curling, the negative (-) value means that curls are formed not in the direction of the surface layer of the label on which the printing layer is positioned but in the direction of the back surface of the printing layer, that is, in the direction of the lower portion (anti-curling layer) of the label.

Note 6) The peeling defects of Table 4 were measured by evaluating the peeling of the label.

As is apparent from Table 4, the films of the examples according to the present invention had superior shrinkability, opacity and so on, and the resulting labels can be used as a replacement for typical paper labels and can be removed in an eco-friendly manner. However, the case where the anti-curling layer is not formed does not satisfy process feability to the extent that it can be used as a replacement for typical paper labels.

**Claims**

1. A heat-shrinkable polyester-based film, comprising a polyester-based resin matrix including a repeating unit of butyleneterephthalate and particles dispersed in the resin matrix, wherein the film has an opacity (%) of 20 ~ 70%, an opacity deviation (%) of within ±5% of an average opacity over an entire width of a film roll, a shrinkage of 40 ~ 80% in a maximum shrinking direction upon treatment with warm water at 90 °C for 10 sec, and a shrinkage deviation of within ±5% of an average shrinkage in the maximum shrinking direction, wherein the heat-shrinkable polyester-based film is obtainable by a method according to claim 7,
   wherein the opacity, the opacity deviation, the shrinkage and the shrinkage deviation are determined as described in the description.

2. The heat-shrinkable polyester-based film of claim 1, wherein the particles are titanium oxide.

3. The heat-shrinkable polyester-based film of claim 1, wherein the polyester-based resin matrix includes at least one copolyester selected from among copolyesters obtained by polymerizing dicarboxylic acid components including one or more dicarboxylic acids including terephthalic acid, oxalic acid, malonic acid, succinic acid, adipic acid, suberic acid, azelaic acid, sebacic acid, phthalic acid, isophthalic acid, naphthalene dicarboxylic acid, and diphenyl ether dicarboxylic acid, and diol components including one or more diols including ethyleneglycol, neopentylglycol, propyleneglycol, trimethyleneglycol, tetramethyleneglycol, hexamethyleneglycol, diethyleneglycol, polyalkyleneglycol, and 1,4-cyclohexane dimethanol.

4. The heat-shrinkable polyester-based film of claim 3, wherein the copolyester comprises 80 mol% or more of terephthalic acid based on a total amount of the dicarboxylic acid components.

5. The heat-shrinkable polyester-based film of claim 3, wherein the copolyester has a melting point of 195 ~ 215°C.

6. The heat-shrinkable polyester-based film of claim 3, wherein the copolyester is included in an amount of 85 ~ 98 wt% based on a total amount of the polyester resin.

7. A method of manufacturing a heat-shrinkable polyester-based film by extruding and stretching a polyester-based resin, comprising:

   compounding particles having an average particle size of 0.1 ~ 5 μm and a homopolyester-based polybutyleneterephthalate resin having an intrinsic viscosity of at least 0.8 dl/g, thus manufacturing a polyester-based resin master batch containing particles, wherein the particles are included in an amount of 10 ~ 70 wt% based on a total weight of the master batch, wherein the particles are inorganic particles or inert organic particles; mixing and extruding the polyester-based resin master batch containing particles and a copolyester-based resin including 14 ~ 24 mol% of diols excluding ethyleneglycol based on a total amount of diol components, thus manufacturing an unstretched sheet, wherein the particles are included in an amount of 2 ~ 10 wt% based on a total weight of the sheet;

preheating the extruded polyester-based sheet; and

stretching the sheet in a transverse direction at 65 ~ 100°C, wherein the manufacturing the master batch comprises mixing the particles and the homopolyester-based polymer having a melting point difference of within 30°C from the copolyester to create a mixture; placing the mixture in a twin-screw extruder or a kneader so that the mixture is melted and kneaded thus obtaining a homopolyester master batch containing particles,

wherein upon obtaining the homopolyester master batch containing particles, a cooling unit is added to inside of a screw of the extruder so that a melting temperature is controlled so as not to exceed 260°C.

8. The method of claim 7, wherein the stretching in the transverse direction is performed at a stretching ratio of 3.5 ~ 5.0 times.

9. The method of claim 7, wherein the particles of the polyester-based resin master batch are titanium oxide.

10. A heat-shrinkable polyester-based label, comprising:

a heat-shrinkable polyester-based film layer according to claims 1 to 6;
a printing layer formed on one surface of the heat-shrinkable polyester-based film layer; and
an anti-curling layer formed on the other surface of the heat-shrinkable polyester-based film layer.

11. The heat-shrinkable polyester-based label of claim 10, wherein the anti-curling layer has a thickness corresponding to 50 ~ 200% of a thickness of the printing layer.

12. The heat-shrinkable polyester-based label of claim 10, wherein the anti-curling layer has a thickness corresponding to 70 ~ 120% of a thickness of the printing layer.

13. The heat-shrinkable polyester-based label of claim 10, wherein the anti-curling layer is a layer comprising at least one resin selected from among acryl, polyurethane, vinyl, an ethylene-vinylacetate copolymer, a vinylacetate resin, and a ketone resin; and a colorant.

14. The heat-shrinkable polyester-based label of claim 12, wherein the anti-curling layer is a layer formed from a coating solution comprising at least one resin selected from among acryl, polyurethane, vinyl, an ethylene-vinylacetate copolymer, a vinylacetate resin, and a ketone resin, a colorant and a solvent.

15. A bottle, to which the label of claim 10 is attached.

16. A method of manufacturing a label-attached bottle, comprising:

applying an adhesive onto the anti-curling layer of the heat-shrinkable polyester-based label of claim 10; and
attaching the heat-shrinkable polyester-based label having the adhesive applied thereon to a bottle.

**Patentansprüche**

1. Wärmeschrumpfbare Folie auf Polyesterbasis, umfassend eine Harzmatrix auf Polyesterbasis, die eine sich wiederholende Einheit aus Butylenterephthalat und in der Harzmatrix dispergierte Teilchen aufweist, wobei die Folie eine Opazität (%) von 20 ~ 70 %, eine Opazitätsabweichung (%) innerhalb von ±5 % von einer durchschnittlichen Opazität über die gesamte Breite einer Folienrolle, eine Schrumpfung von 40 ~ 80 % in einer maximalen Schrumpfrichtung bei Behandlung mit warmem Wasser bei 90 °C für 10 Sekunden, und eine Schrumpfungsabweichung innerhalb von ±5 % von einer durchschnittlichen Schrumpfung in der maximalen Schrumpfrichtung aufweist, wobei die wärmeschrumpfbare Folie auf Polyesterbasis durch ein Verfahren nach Anspruch 7 erhalten werden kann, wobei die Opazität, die Opazitätsabweichung, die Schrumpfung, und die Schrumpfungsabweichung wie in der Beschreibung beschrieben bestimmt werden.

**2.** Wärmeschrumpfbare Folie auf Polyesterbasis nach Anspruch 1, wobei die Teilchen Titanoxid sind.

**3.** Wärmeschrumpfbare Folie auf Polyesterbasis nach Anspruch 1, wobei die Harzmatrix auf Polyesterbasis mindestens einen Copolyester aufweist, der aus Copolyestern ausgewählt ist, die erhalten werden durch Polymerisieren von Dicarbonsäurekomponenten, einschließlich einer oder mehrerer Dicarbonsäuren, einschließlich Terephthalsäure, Oxalsäure, Malonsäure, Bernsteinsäure, Adipinsäure, Korksäure, Azelainsäure, Sebacinsäure, Phthalsäure, Isophthalsäure, Naphthalindicarbonsäure und Diphenyletherdicarbonsäure, und Diolkomponenten einschließlich eines oder mehrerer Diole, einschließlich Ethylenglycol, Neopentylglycol, Propylenglycol, Trimethylenglycol, Tetramethylenglycol, Hexamethylenglycol, Diethylenglycol, Polyalkylenglycol und 1,4-Cyclohexandimethanol.

**4.** Wärmeschrumpfbare Folie auf Polyesterbasis nach Anspruch 3, wobei der Copolyester 80 Mol-% oder mehr Terephthalsäure, bezogen auf die Gesamtmenge der Dicarbonsäurekomponenten, umfasst.

**5.** Wärmeschrumpfbare Folie auf Polyesterbasis nach Anspruch 3, wobei der Copolyester einen Schmelzpunkt von 195 ~ 215 °C aufweist.

**6.** Wärmeschrumpfbare Folie auf Polyesterbasis nach Anspruch 3, wobei der Copolyester in einer Menge von 85 ~ 98 Gew.-%, bezogen auf die Gesamtmenge des Polyesterharzes, enthalten ist.

**7.** Verfahren zur Herstellung einer wärmeschrumpfbaren Folie auf Polyesterbasis durch Extrudieren und Recken eines Harzes auf Polyesterbasis, umfassend:

Mischen von Teilchen mit einer durchschnittlichen Teilchengröße von 0,1 ~ 5 $\mu$m und einem Polybutylenterephthalatharz auf Homopolyesterbasis mit einer intrinsischen Viskosität von mindestens 0,8 dl/g, wodurch ein Harz-Masterbatch auf Polyesterbasis, der Teilchen enthält, hergestellt wird, wobei die Teilchen in einer Menge von 10 ~ 70 Gew.-%, bezogen auf das Gesamtgewicht des Masterbatches, enthalten sind, wobei die Teilchen anorganische Teilchen oder inerte organische Teilchen sind;

Mischen und Extrudieren der Harz-Masterbatches auf Polyesterbasis, der Teilchen und ein Harz auf Copolyesterbasis enthält, der 14 ~ 24 Mol-% Diole, ausschließlich Ethylenglycol, bezogen auf eine Gesamtmenge an Diolkomponenten, aufweist, wodurch eine ungereckte Folie hergestellt wird, wobei die Teilchen in einer Menge von 2 ~ 10 Gew.-%, bezogen auf das Gesamtgewicht der Folie, enthalten sind;

Vorheizen der extrudierten Folie auf Polyesterbasis; und

Recken der Folie in einer Querrichtung bei 65 ~ 100 °C, wobei die Herstellung des Master-Batches das Mischen der Teilchen und des Polymers auf Homopolyesterbasis mit einer Schmelzpunktdifferenz innerhalb von 30° C zu dem Copolyester umfasst, um ein Gemisch zu erzeugen; Platzieren des Gemischs in einem Doppelschneckenextruder oder einem Kneter, so dass das Gemisch geschmolzen und geknetet wird, wodurch ein Homopolyester-Masterbatch erhalten wird, der Teilchen enthält, wobei nach Erhalt des Homopolyester-Masterbatches, der Teilchen enthält, eine Kühleinheit in das Innere eines Schneckenextruders gegeben wird, so dass eine Schmelztemperatur derart gesteuert wird, dass 260 °C nicht überschritten werden.

**8.** Verfahren nach Anspruch 7, wobei das Recken in der Querrichtung in einem Reckverhältnis eines 3,5 ~ 5,0-fachen durchgeführt wird.

**9.** Verfahren nach Anspruch 7, wobei die Teilchen des Masterbatches auf Polyesterbasis Titanoxid sind.

**10.** Wärmeschrumpfbares Etikett auf Polyesterbasis, umfassend:

eine wärmeschrumpfbare Folienschicht auf Polyesterbasis nach den Ansprüchen 1 bis 6;

eine Druckschicht, die auf einer Oberfläche der wärmeschrumpfbaren Folienschicht auf Polyesterbasis gebildet ist; und

eine Antiroll-Schicht, die auf der anderen Oberfläche der wärmeschrumpfbaren Folienschicht auf Polyesterbasis gebildet ist.

**11.** Wärmeschrumpfbares Etikett auf Polyesterbasis nach Anspruch 10, wobei die Antiroll-Schicht eine Dicke aufweist, die 50 ~ 200 % einer Dicke der Druckschicht entspricht.

**12.** Wärmeschrumpfbares Etikett auf Polyesterbasis nach Anspruch 10, wobei die Antiroll-Schicht eine Dicke aufweist, die 70 ~ 120 % einer Dicke der Druckschicht entspricht.

**13.** Wärmeschrumpfbares Etikett auf Polyesterbasis nach Anspruch 10, wobei die Antiroll-Schicht eine Schicht ist, die mindestens ein Harz, das ausgewählt ist aus Acryl, Polyurethan, Vinyl, einem Ethylen-Vinylacetat-Copolymer, einem Vinylacetatharz, und einem Ketonharz; und einen Farbstoff umfasst.

**14.** Wärmeschrumpfbares Etikett auf Polyesterbasis nach Anspruch 12, wobei die Antiroll-Schicht eine Schicht ist, die aus einer Beschichtungslösung gebildet ist, die mindestens ein Harz, das ausgewählt ist aus Acryl, Polyurethan, Vinyl, einem Ethylen-Vinylacetat-Copolymer, einem Vinylacetatharz, und einem Ketonharz, einen Farbstoff und ein Lösungsmittel umfasst.

**15.** Flasche, an der das Etikett nach Anspruch 10 angebracht ist.

**16.** Verfahren zur Herstellung einer mit einem Etikett versehenen Flasche, umfassend:

Aufbringen eines Klebstoffs auf die Antiroll-Schicht des wärmeschrumpfbaren Etiketts auf Polyesterbasis nach Anspruch 10; und
Anbringen des wärmeschrumpfbaren Etiketts auf Polyesterbasis mit dem darauf aufgebrachten Klebstoff an eine Flasche.

## Revendications

**1.** Un film à base de polyester thermorétractable, comprenant une matrice de résine à base de polyester comprenant une unité récurrente de butylènetéréphtalate et des particules dispersées dans la matrice de résine, dans lequel le film a une opacité (%) de 20 à 70%, un écart d'opacité (%) à $\pm$ 5% d'une opacité moyenne sur toute une largeur d'un rouleau de film, un retrait de 40 à 80% dans une direction de retrait maximale après traitement avec de l'eau chaude à 90 °C pendant 10 secondes et un écart de rétraction de $\pm$ 5% d'un rétrécissement moyen dans la direction de retrait maximale, dans lequel le film à base de polyester thermorétractable peut être obtenu par un procédé selon la revendication 7,
dans lequel l'opacité, la déviation de l'opacité, le retrait et l'écart du retrait sont déterminés tels que décrit dans la description.

**2.** Le film à base de polyester thermorétractable selon la revendication 1,
dans lequel les particules sont de l'oxyde de titane.

**3.** Le film à base de polyester thermorétractable selon la revendication 1,
dans lequel la matrice de résine à base de polyester comprend au moins un copolyester choisi parmi les copolyesters obtenus par polymérisation de composants d'acides dicarboxyliques comprenant un ou plusieurs acides dicarboxyliques comprenant l'acide téréphtalique, l'acide oxalique, l'acide malonique, l'acide succinique, l'acide adipique, l'acide subérique, l'acide azélaïque, l'acide sébacique, l'acide phtalique, l'acide isophtalique, l'acide dicarboxylique de naphtalène et l'acide dicarboxylique de diphényléther, et les composants de diols comprenant un ou plusieurs diols comprenant l'éthylèneglycol, le néopentylglycol, le propylèneglycol, le triméthylèneglycol, le tétraméthylèneglycol, l'hexaméthylèneglycol, le diéthylèneglycol, le polyalkylèneglycol et le diméthanol de 1,4-cyclohexane.

**4.** Le film à base de polyester thermorétractable selon la revendication 3,
dans lequel le copolyester comprend 80% en moles ou plus d'acide téréphtalique sur la base d'une quantité totale de composants d'acide dicarboxylique.

**5.** Le film à base de polyester thermorétractable selon la revendication 3,
dans lequel le copolyester a un point de fusion de 195 à 215°C.

**6.** Le film à base de polyester thermorétractable selon la revendication 3,
dans lequel le copolyester est inclus en une quantité de 85 à 98% en poids par rapport à la quantité totale de résine de polyester.

**7.** Un procédé de fabrication d'un film à base de polyester thermorétractable par extrusion et étirage d'une résine à base de polyester, comprenant:

le mélange de particules ayant une taille moyenne de particules de 0,1 à 5 $\mu$m et d'une résine de polybutylènetéréphtalate à base d'homopolyester ayant une viscosité intrinsèque d'au moins 0,8 dl / g, fabriquant ainsi un mélange maître de résine à base de polyester contenant des particules, dans lequel les particules sont comprises dans une quantité de 10 à 70% en poids par rapport au poids total du mélange maître, les particules étant des particules inorganique ou des particules organiques inertes ;

le mélange et l'extrusion des particules contenant un mélange maître de résine à base de polyester et une résine à base de copolyester comprenant de 14 à 24% en moles de diols à l'exclusion d'éthylèneglycol sur la base d'une quantité totale de composants diols, fabriquant ainsi une feuille non étirée, dans lequel les particules sont inclus dans une quantité de 2 à 10% en poids par rapport au poids total de la feuille;

le préchauffage de la feuille à base de polyester extrudée; et

l'étirage de la feuille dans une direction transversale à 65 à 100 °C, dans lequel la fabrication du mélange maître comprend le mélange des particules et du polymère à base d'homopolyester ayant une différence de point de fusion de moins de 30 ° C par rapport au copolyester pour créer un mélange;

le placement du mélange dans une extrudeuse à deux vis ou dans un malaxeur, de sorte que le mélange soit fondu et malaxé, obtenant ainsi un mélange maître d'homopolyester contenant des particules, dans lequel, lors de l'obtention du mélange maître d'homopolyester contenant des particules, une unité de refroidissement est ajoutée à l'intérieur d'une vis de l'extrudeuse de sorte qu'une température de fusion est contrôlée de façon à ne pas surpasser 260 °C.

8.  Le procédé selon la revendication 7, dans lequel l'étirage dans la direction transversale est effectué à un taux d'étirage de 3,5 à 5,0 fois.

9.  Le procédé selon la revendication 7, dans lequel les particules du mélange maître de résine à base de polyester sont de l'oxyde de titane.

10. Une étiquette à base de polyester thermorétractable comprenant:

une couche de film à base de polyester thermorétractable selon les revendications 1 à 6 ;
une couche d'impression formée sur une surface de la couche de film à base de polyester thermorétractable; et
une couche anti-ondulation formée sur l'autre surface de la couche de film à base de polyester thermorétractable.

11. L'étiquette à base de polyester thermorétractable selon la revendication 10,
dans laquelle la couche anti-ondulation a une épaisseur correspondant à 50 à 200% d'une épaisseur de la couche d'impression.

12. L'étiquette à base de polyester thermorétractable selon la revendication 10,
dans laquelle la couche anti-ondulation a une épaisseur correspondant à 70 à 120% d'une épaisseur de la couche d'impression.

13. L'étiquette à base de polyester thermorétractable selon la revendication 10,
dans laquelle la couche anti-ondulation est une couche comprenant au moins une résine choisie parmi l'acryle, le polyuréthane, le vinyle, un copolymère d'acétate de vinyle et d'éthylène, une résine d'acétate vinylique, et une résine de cétone; et un colorant.

14. L'étiquette à base de polyester thermorétractable selon la revendication 12,
dans laquelle la couche anti-ondulation est une couche formée d'une solution de revêtement comprenant au moins une résine choisie parmi l'acryle, le polyuréthane, le vinyle, un copolymère d'acétate de vinyle et d'éthylène, une résine d'acétate vinylique, et une résine de cétone, un colorant et un solvant.

15. Une bouteille à laquelle l'étiquette de la revendication 10 est attachée.

16. Un procédé de fabrication d'une bouteille attachée à une étiquette, comprenant:

l'application d'un adhésif sur la couche anti-ondulation de l'étiquette à base de polyester thermorétractable de la revendication 10; et
la fixation de l'étiquette à base de polyester thermorétractable sur laquelle l'adhésif est appliqué à une bouteille.

**EP 2 554 576 B1**

## REFERENCES CITED IN THE DESCRIPTION

### Patent documents cited in the description

- US 6231958 B1
- US 20060063008 A1